# EUROPEAN PATENT APPLICATION

(11) **EP 4 822 821 A1**
(43) Date of publication of application: **14.10.2026**
(21) Application number: 24914993.1
(22) Date of filing: 08.11.2024
(51) Int. Cl.: H01M 10/613

(54) **HEAT EXCHANGE ASSEMBLY, CASE BODY, BATTERY AND ELECTRICAL APPARATUS**

(30) Priority: 03.01.2024 CN 202410008740
(71) Applicant: Contemporary Amperex Technology Co., Limited, Ningde, Fujian 352100 (CN)
(72) Inventor: LIU, Yang, Ningde, Fujian 352100 (CN); WANG, Yawei, Ningde, Fujian 352100 (CN); ZHAO, Bin, Ningde, Fujian 352100 (CN); YU, Dingshan, Ningde, Fujian 352100 (CN)
(74) Representative: Straus, Alexander
(86) International application number: PCT/CN2024/130826
(87) International publication number: WO 2025/145777

(57) **Abstract**

The present application provides a heat exchange assembly, a case, a battery and an electric apparatus. The heat exchange assembly comprises a heat exchange piece, a current collecting piece and a sleeve; the heat exchange piece is provided with a flow channel extending in a first direction; the current collecting piece being arranged at the two ends of the heat exchange piece in the first direction, the current collecting piece is provided with fluid inlets/outlets, and the fluid inlets/outlets leading to the flow channel; the sleeve is mutually sleeved on at least one of the heat exchange piece and the current collecting piece, and is connected to the heat exchange piece and the current collecting piece. The heat exchange assembly provided by the present application helps to improve the connection strength of the current collecting piece and the heat exchange piece and the overall structural strength of the heat exchange assembly, thereby helping to improve the reliability of batteries.

## Description

### CROSS-REFERENCE TO RELATED APPLICATIONS

This application claims priority to the Chinese Patent Application No. 202410008740.3 filed on January 3, 2024 and entitled "HEAT EXCHANGE ASSEMBLY, CASE, BATTERY AND ELECTRIC APPARATUS", which is incorporated herein by reference in its entirety.

### TECHNICAL FIELD

This application relates to the field of battery technologies, and specifically, to a heat exchange assembly, a case, a battery and an electric apparatus.

### BACKGROUND

Batteries are widely used in electronic devices, such as mobile phones, laptop computers, electric bicycles, electric vehicles, electric airplanes, electric ships, electric toy cars, electric toy ships, electric toy airplanes, and electric tools. Battery cells may include nickel-cadmium battery cells, nickel-hydrogen battery cells, lithium-ion battery cells, secondary alkaline zinc-manganese battery cells, and the like.

In the development of battery technologies, in addition to improving the service performance of batteries, how to improve the reliability of batteries is a problem that cannot be ignored. Therefore, how to improve the reliability of batteries remains an ongoing technical concern in battery technologies.

### SUMMARY

The embodiments of this application provide a heat exchange assembly, a case, a battery, and an electric apparatus, to improve reliability of the battery.

According to a first aspect, a heat exchange assembly provided in an embodiment of this application includes a heat exchange piece, a current collecting piece, and a sleeve; the heat exchange piece is provided with a flow channel extending along a first direction; the current collecting piece is provided at two ends of the heat exchange piece along the first direction, where the current collecting piece is provided with a fluid inlet/outlet, and the fluid inlet/outlet communicates with the flow channel; and the sleeve is sleeved onto at least one of the heat exchange piece and the current collecting piece, and connects the heat exchange piece and the current collecting piece.

The heat exchange assembly provided in this embodiment of this application helps improve the connection strength between the current collecting piece and the heat exchange piece with the sleeve sleeved onto at least one of the current collecting piece and the heat exchange piece, and helps improve the overall structural strength of the heat exchange assembly. In this way, the risk of leakage of the flowing medium caused by failure of the connection between the current collecting piece and the heat exchange piece is reduced, improving the reliability of the heat exchange assembly. In a case that the heat exchange assembly is applied in the battery, the reliability of heat exchange between the heat exchange assembly and the battery cell is improved, which helps improve the reliability of the battery.

In some embodiments, the sleeve includes a first sub-sleeve and a second sub-sleeve, the first sub-sleeve is sleeved onto an end portion of the heat exchange piece along the first direction, the second sub-sleeve is sleeved onto an end of the current collecting piece facing the heat exchange piece, and the first sub-sleeve and the second sub-sleeve are connected to each other. This helps further improve the connection strength between the current collecting piece and the heat exchange piece, thereby improving the overall structural strength of the heat exchange assembly. In a scenario where the heat exchange assembly is applied in the battery, this helps further improve the reliability of heat exchange between the heat exchange assembly and the battery cell, thereby further improving the reliability of the battery.

In some embodiments, materials of the first sub-sleeve and the second sub-sleeve both include plastic and are both formed by injection molding, and the first sub-sleeve and the second sub-sleeve are connected through welding. This helps reduce an overall weight of the heat exchange assembly. In a scenario where the heat exchange assembly is applied in the battery, this helps improve the energy density of the battery. In addition, this helps reduce difficulty of processing the first sub-sleeve and the second sub-sleeve, simplifies the production process of the first sub-sleeve and the second sub-sleeve. Welding connection of the first sub-sleeve and the second sub-sleeve helps improve the connection strength between the first sub-sleeve and the second sub-sleeve and further improves the overall structural strength of the heat exchange assembly.

In some embodiments, at least a part of the second sub-sleeve is sleeved onto an outer peripheral side of the first sub-sleeve. In this way, the connection strength between the first sub-sleeve and the second sub-sleeve is improved, which helps improve the connection strength between the heat exchange piece and the current collecting piece, and helps further improve the overall structural strength of the heat exchange assembly.

In some embodiments, a side of the second sub-sleeve facing the current collecting piece is provided with a groove, and an end of the current collecting piece facing the second sub-sleeve is accommodated in the groove. In this way, the connection strength between the second sub-sleeve and the current collecting piece is improved, thereby helping improve the overall structural strength of the heat exchange assembly.

In some embodiments, the heat exchange piece is provided with a plurality of flow channels spaced apart, the first sub-sleeve includes a sleeving portion and a reinforcing portion, the reinforcing portion and the sleeving portion jointly form a plurality of through holes, and the plurality of through holes are in one-to-one correspondence with the plurality of flow channels. This helps improve the structural strength of the first sub-sleeve, thereby improving the connection strength between the heat exchange piece and the first sub-sleeve.

In some embodiments, a material of the first sub-sleeve is different from a material of the heat exchange piece, and the first sub-sleeve is adhesively connected to the heat exchange piece; and/or a material of the second sub-sleeve is different from a material of the current collecting piece, and the second sub-sleeve is adhesively connected to the current collecting piece. Such arrangement helps improve the structural strength of the heat exchange assembly, facilitates connection between the first sub-sleeve and the heat exchange piece, and facilitates a sealed connection between the first sub-sleeve and the heat exchange piece; and/or facilitates connection between the second sub-sleeve and the current collecting piece, and facilitates a sealed connection between the second sub-sleeve and the current collecting piece.

In some embodiments, the flow channel includes a first flow channel, a second flow channel, and a third flow channel that are spaced apart from each other, the current collecting piece at one end of the heat exchange piece includes a first flow guide channel and a second flow guide channel that are isolated from each other, the first flow guide channel communicates the fluid inlet/outlet with the first flow channel, and the second flow guide channel communicates the third flow channel with the adjacent second flow channel; and the current collecting piece at the other end of the heat exchange piece includes a third flow guide channel and a fourth flow guide channel that are isolated from each other, the third flow guide channel communicates the third flow channel with the fluid inlet/outlet, and the fourth flow guide channel communicates the first flow channel with the adjacent second flow channel, so that the first flow channel, the second flow channel, and the third flow channel are connected in series. When the heat exchange assembly is applied in the battery, the flowing medium flows through the first flow channel, the second flow channel, and the third flow channel in sequence, which facilitates sufficient heat exchange between the flowing medium and the battery cell, helps improve the heat exchange efficiency between the flowing medium and the battery cell, and reduces a usage amount of the flowing medium.

In some embodiments, the heat exchange assembly further includes a blocking member, the flow channel includes an alternative flow channel, and the blocking member is provided at the two ends of the heat exchange piece along the first direction to block the alternative flow channel. This helps improve the connection strength between the current collecting piece and the heat exchange piece, helps improve the heat exchange efficiency between the heat exchange assembly and the battery cell, and improves utilization of the flowing medium. Moreover, the blockage of the alternative flow channel by the blocking member helps improve the connection strength between the current collecting piece and the heat exchange piece, thereby improving the overall structural strength of the heat exchange assembly.

In some embodiments, the blocking member and the sleeve are integrally formed by injection molding. Such arrangement helps improve the connection strength between the blocking member and the sleeve and simplifies the production process of the blocking member and the sleeve.

According to a second aspect, an embodiment of this application provides a case, including the heat exchange assembly according to the embodiment of the first aspect.

The case provided in the embodiment of this application has the same technical effects because the heat exchange assembly provided in any of the above embodiments is applied. Details are not be repeated herein.

According to a third aspect, an embodiment of this application provides a battery, including the case according to the embodiment of the second aspect and a battery cell; the battery cell is accommodated in the case; the heat exchange piece is in contact with the battery cell and is configured to exchange heat with the battery cell.

The battery provided in the embodiment of this application has the same technical effects because the case provided by the above embodiment is applied. Details are not be repeated herein.

According to a fourth aspect, an embodiment of this application provides an electric apparatus, including the battery according to the embodiment of the third aspect. The battery is configured to provide electric energy.

The electric apparatus provided in the embodiment of this application has the same technical effects because the battery provided in the embodiment of this application is applied. Details are not be repeated herein.

### BRIEF DESCRIPTION OF DRAWINGS

In order to more clearly illustrate the technical solutions of the embodiments of this application, the drawings used in the embodiments of this application are briefly introduced below. It is clear that the drawings described below are only some embodiments of this application. For those of ordinary skill in the art, other drawings may also be obtained according to the drawings without creative efforts.
FIG. 1 is a schematic structural diagram of a vehicle provided in an embodiment of this application;
FIG. 2 is a schematic exploded view of a battery provided in an embodiment of this application;
FIG. 3 is a schematic structural diagram of a battery module in a battery provided in an embodiment of this application;
FIG. 4 is a schematic exploded view of a battery cell in a battery provided in some embodiments of this application;
FIG. 5 is a schematic structural diagram of a heat exchange assembly provided in an embodiment of this application;
FIG. 6 is a front view of a heat exchange assembly provided in an embodiment of this application;
FIG. 7 is a schematic structural cross-sectional view along A-A of FIG. 6;
FIG. 8 is an enlarged view of a part at position B in FIG. 7;
FIG. 9 is a schematic structural diagram of a second sub-sleeve in a heat exchange assembly provided in an embodiment of this application;
FIG. 10 is a schematic structural diagram of a first sub-sleeve in a heat exchange assembly provided in an embodiment of this application;
FIG. 11 is a schematic structural diagram of a part of a heat exchange assembly provided in an embodiment of this application;
FIG. 12 is a schematic structural diagram of a part of another heat exchange assembly provided in an embodiment of this application; and
FIG. 13 is a schematic structural diagram of a part of still another heat exchange assembly provided in an embodiment of this application.

In the drawings, the drawings are not drawn to actual scale.

Description of reference signs:
1. vehicle; 1a. motor; 1b. controller;
10. battery; 11. case; 111. first case portion; 112. second case portion;
20. battery module;
30. battery cell; 31. housing; 31a. accommodating cavity; 311. shell; 311a. opening; 312. end cover; 32. electrode assembly;
40. heat exchange assembly; 41. heat exchange piece; 411. flow channel; 411a. first flow channel; 411b. second flow channel; 411c. third flow channel; 411d. alternative flow channel; 42. current collecting piece; 42a. fluid inlet/outlet; 42b. first flow guide channel; 42c. second flow guide channel; 42d. third flow guide channel; 42e. fourth flow guide channel; 43. sleeve; 431. first sub-sleeve; 431a. through hole; 4311. sleeving portion; 4312. reinforcing portion; 432. second sub-sleeve; 432a. groove; 44. blocking member; and
X. first direction.

### DESCRIPTION OF EMBODIMENTS

The implementations of this application are further described in detail below with reference to the drawings and embodiments. The detailed description of the following embodiments and the drawings are used to exemplarily illustrate the principles of this application, but cannot be used to limit the scope of this application, that is, this application is not limited to the described embodiments.

In the description of this application, it should be noted that, unless otherwise specified, the meaning of "a plurality of" means two or more; the orientations or positional relationships indicated by the terms "upper", "lower", "left", "right", "inner", "outer", and the like are only for the convenience of describing this application and simplifying the description, and do not indicate or imply that the apparatus or element referred to must have a specific orientation, or be constructed and operated in a specific orientation, and therefore cannot be understood as a limitation on this application. In addition, the terms "first", "second", and the like are used for descriptive purposes only and cannot be understood as indication or implication of relative importance. "Vertical" is not strictly vertical, but within the allowable range of error. "Parallel" is not strictly parallel, but within the allowable range of error.

The mention of "an embodiment" in this application means that a specific feature, structure or characteristic described with reference to the embodiment may be included in at least one embodiment of this application. The appearance of the phrase in various positions in the specification does not necessarily refer to the same embodiment, nor is it an independent or alternative embodiment that is mutually exclusive with other embodiments. It is explicitly and implicitly understood by those skilled in the art that the embodiments described in this application may be combined with other embodiments.

In the description of this application, it should also be noted that, unless otherwise clearly specified and limited, the terms "mount", "connect", and "join" should be understood in a broad sense, for example, it may be a fixed connection, a detachable connection, or an integral connection; and it may be a direct connection or an indirect connection through an intermediate medium. For those of ordinary skill in the art, the specific meanings of the above terms in this application may be understood according to specific circumstances.

In this application, the battery cell may include a lithium-ion secondary battery cell, a lithium-ion primary battery cell, a lithium-sulfur battery cell, a sodium-lithium-ion battery cell, a sodiumion battery cell, a magnesium-ion battery cell, or the like. The embodiments of this application do not limit this. The battery cell may be cylindrical, flat, rectangular, or the like. The embodiments of this application do not limit this either. Battery cells are generally classified into three types based on the packaging method: cylindrical battery cell, prismatic battery cell, and pouch battery cell. The embodiments of this application do not limit this either.

The battery mentioned in the embodiments of this application refers to a single physical module including one or more battery cells to provide higher voltage and capacity. For example, the battery mentioned in this application may include a battery module, a battery pack, or the like. A battery generally includes a case for packaging one or more battery cells. The case prevents liquids or other foreign objects from affecting the charge or discharge of the battery cells.

The battery cell includes an electrode assembly and an electrolytic solution. The electrode assembly includes a positive electrode sheet, a negative electrode sheet, and a separating piece. The battery cell mainly operates based on movement of metal ions between the positive electrode sheet and the negative electrode sheet. The positive electrode sheet includes a positive electrode current collector and a positive electrode active material layer. The positive electrode active material layer is applied to a surface of the positive electrode current collector; the positive electrode current collector includes a positive electrode current collecting portion and a positive electrode protrusion protruding from the positive electrode current collecting portion. The positive electrode current collecting portion is coated with the positive electrode active material layer. At least a part of the positive electrode protrusion is not coated with the positive electrode active material layer. The positive electrode protrusion serves as a positive electrode tab. A lithium-ion battery is used as an example. A material of the positive electrode current collector may be aluminum, and the positive electrode active material layer includes a positive electrode active material. The positive electrode active material may be lithium cobalt oxide, lithium iron phosphate, ternary lithium, lithium manganate, or the like. The negative electrode sheet includes a negative electrode current collector and a negative electrode active material layer. The negative electrode active material layer is applied to a surface of the negative electrode current collector; the negative electrode current collector includes a negative electrode current collecting portion and a negative electrode protrusion protruding from the negative electrode current collecting portion. The negative electrode current collecting portion is coated with the negative electrode active material layer. At least a part of the negative electrode protrusion is not coated with the negative electrode active material layer. The negative electrode protrusion serves as a negative electrode tab. A material of the negative electrode current collector may be copper, and the negative electrode active material layer includes a negative electrode active material. The negative electrode active material may be carbon, silicon, or the like. In order to ensure passage of a large current without fusing, a plurality of positive electrode tabs are stacked, and a plurality of negative electrode tabs are stacked. A material of the separating piece may be PP (polypropylene, polypropylene), PE (polyethylene, polyethylene), or the like. In addition, the electrode assembly may be a wound structure or a stacked structure. The embodiments of this application are not limited thereto.

During the cyclic operation of the battery cell, heat is inevitably generated, or in an extremely cold environment, when the battery cell just starts to operate, the battery cell needs to be heated so that the battery cell operates at an appropriate operation temperature. The battery usually exchanges heat with the battery cell through a low-temperature or high-temperature flowing medium flowing in the heat exchange assembly to cool or heat the battery cell, so that the battery cell operates within an appropriate temperature range.

However, in the related art, a connection strength at a connection position of a relevant structure in the heat exchange assembly is low. During the use of the heat exchange assembly, the connection position of the relevant structure is prone to cracking and other problems, which easily causes outflow of the flowing medium inside the heat exchange assembly. In this case, the battery cell cannot be heated or cooled, leading to excessively high or low operation temperature of the battery cell. In this way, the reliability of the battery is seriously affected.

Based on this, the inventors have improved the structure of the heat exchange assembly. The technical solutions described in the embodiments of this application are applicable to a heat exchange assembly, a case including a heat exchange assembly, a battery provided with a case, and an electric apparatus provided with the battery.

In the heat exchange assembly provided in the embodiments of this application, a sleeve is provided, and the sleeve is sleeved onto at least one of the heat exchange piece and the current collecting piece, so that the connection between the heat exchange piece and the current collecting piece is achieved through the sleeve; and a flow channel of the heat exchange piece communicates with a fluid inlet and a fluid outlet of the current collecting piece. This enhances the connection strength between the current collecting piece and the heat exchange piece, reducing the risk of cracking at the connection position between the two, thereby improving the overall structural strength of the heat exchange assembly, reducing the risk of leakage of the flowing medium during the operation of the heat exchange assembly, and thereby improving the reliability of the battery.

The electric apparatus may be a vehicle, a mobile phone, a portable device, a laptop computer, a ship, a spacecraft, an electric toy, an electric tool, and the like. The vehicle may be a fuel vehicle, a gas vehicle, or a new energy vehicle. The new energy vehicle may be a pure electric vehicle, a hybrid vehicle, an extended-range vehicle, or the like. The spacecraft includes airplane, rocket, space shuttle, spacecraft, or the like. The electric toy includes fixed or mobile electric toy, such as game console, electric car toy, electric ship toy, and electric airplane toys. The electric tool includes metal cutting electric tool, grinding electric tool, assembly electric tool, and railway electric tool, such as electric drill, electric grinder, electric wrench, electric screwdriver, electric hammer, impact drill, concrete vibrator, and electric planer. The electric apparatus is not specifically limited in the embodiments of this application.

For the convenience of description, in the following embodiments, as an example, the electric apparatus is a vehicle.

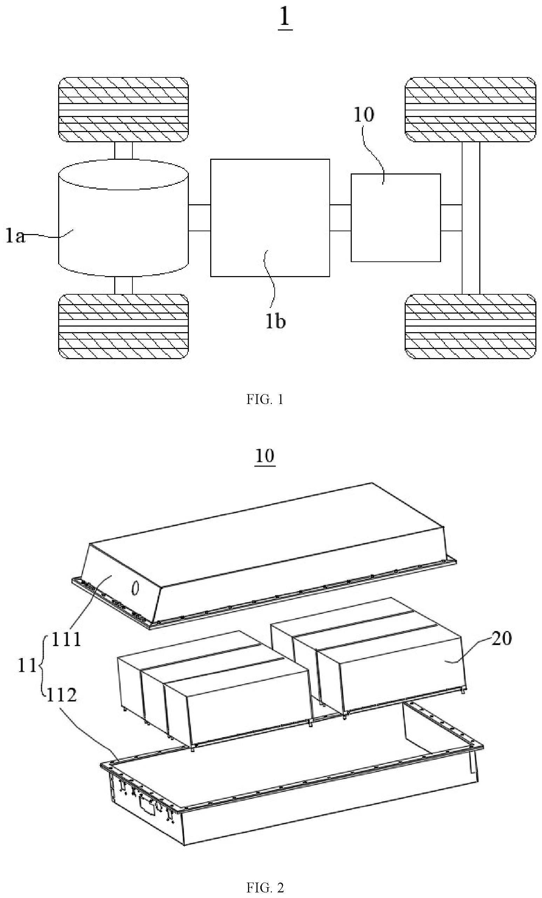

As shown in FIG. 1, a battery 10 is provided inside a vehicle 1. The battery 10 may be provided at a bottom, head or tail of the vehicle 1. The battery 10 may be used for power supply of the vehicle 1. For example, the battery 10 may serve as an operating power source of the vehicle 1.

The vehicle 1 may further include a controller 1b and a motor 1a. The controller 1b is used to control the battery 10 to supply power to the motor 1a, for example, to satisfy the power requirements for starting, navigation, and driving of the vehicle 1.

In some embodiments of this application, the battery 10 may not only serve as an operating power source of the vehicle 1, but may also serve as a driving power source of the vehicle 1 to completely or partially replace fuel oil or natural gas to provide driving power for the vehicle 1.

Refer to FIG. 2. The battery 10 includes a battery cell (not shown in FIG. 2). The battery 10 may further include a case 11 for accommodating the battery cell.

The case 11 is used to accommodate the battery cell, and the case 11 may have various structures. In some embodiments, the case 11 may include a first case portion 111 and a second case portion 112. The first case portion 111 and the second case portion 112 fit each other. The first case portion 111 and the second case portion 112 jointly define an accommodating space for accommodating the battery cell. The second case portion 112 may be a hollow structure with one end open, the first case portion 111 may be a plate-like structure, and the first case portion 111 fits an open side of the second case portion 112 to form the case 11 having an accommodating space. The first case portion 111 and the second case portion 112 may alternatively both be hollow structures with one side open. An open side of the first case portion 111 fits the open side of the second case portion 112 to form the case having an accommodating space. Certainly, the first case portion 111 and the second case portion 112 may be in various shapes, for example, may be cylindrical or rectangular.

To improve the sealing performance after the first case portion 111 and the second case portion 112 are connected, a sealing member, such as a sealant or a sealing ring, may further be provided between the first case portion 111 and the second case portion 112.

It is assumed that the first case portion 111 fits the second case portion 112. The first case portion 111 may also be referred to as an upper case cover, and the second case portion 112 may also be referred to as a lower case.

In the battery 10, one battery cell or a plurality of battery cells may be provided. If a plurality of battery cells are provided, the plurality of battery cells may be connected in series, parallel, series-parallel. A series-parallel connection means that the plurality of battery cells are in both series connection and parallel connection. The plurality of battery cells may be directly connected in series, parallel, or series-parallel, and then an entirety formed by the plurality of battery cells is accommodated in the case. Alternatively, the plurality of battery cells may first be connected in series, parallel, or series-parallel to form a battery module 20. The plurality of battery modules 20 are then connected in series, parallel, or series-parallel, to form an entirety accommodated in the case 11.

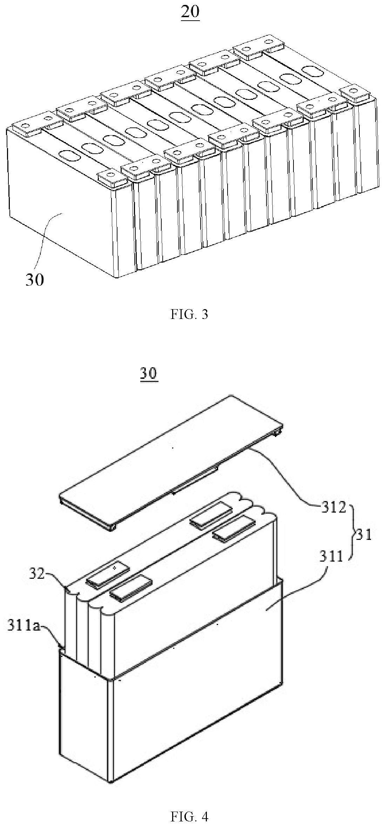

In some embodiments, as shown in FIG. 3, FIG. 3 is a schematic structural diagram of the battery module 20 shown in FIG. 2. In the battery module 20, a plurality of battery cells 30 are provided. The plurality of battery cells 30 are first connected in series, parallel, or series-parallel to form the battery module 20. A plurality of battery modules 20 are then connected in series, parallel, or series-parallel to form an entirety accommodated in the case 11.

In some embodiments, the plurality of battery cells 30 in the battery module 20 may be electrically connected through busbar members to achieve parallel connection, series connection, or series-parallel connection of the plurality of battery cells 30 in the battery module 20.

Refer to FIG. 4. FIG. 4 is a schematic exploded view of the battery cell 30 shown in FIG. 3. The battery cell 30 provided in the embodiments of this application includes an electrode assembly 32 and a housing 31. The housing 31 is provided with an accommodating cavity, and the electrode assembly 32 is accommodated in the accommodating cavity.

In some embodiments, the housing 31 may include a shell 311 and an end cover 312. The shell 311 is a hollow structure with one side open. The end cover 312 fits the opening 311a of the shell 311, enabling a sealed connection to form a sealed space for accommodating the electrode assembly 32 and an electrolyte.

In assembly of the battery cell 30, the electrode assembly 32 may be first placed into the shell 311, then the end cover 312 covers the opening of the shell 311, and then the electrolyte is injected into the shell 311 through an electrolyte injection port on the end cover 312.

In some embodiments, the housing 31 may also be used to accommodate an electrolyte, such as an electrolytic solution. The housing 31 may have various structures.

The shell 311 may be in various shapes, such as cylinder or rectangle. The shape of the shell 311 may be determined based on the specific shape of the electrode assembly 32. For example, if the electrode assembly 32 is a cylindrical structure, the shell 311 may be a cylindrical structure. If the electrode assembly 32 is a rectangular structure, the shell 311 may be a rectangular structure. In FIG. 4, for example, both the shell 311 and the electrode assembly 32 are rectangular structures.

The shell 311 may be made of various materials, such as copper, iron, aluminum, stainless steel, and aluminum alloy. This is not specifically limited in the embodiments of this application.

One or more electrode assemblies 32 may be accommodated in the shell 311. In FIG. 4, two electrode assemblies 32 are accommodated in the shell 311.

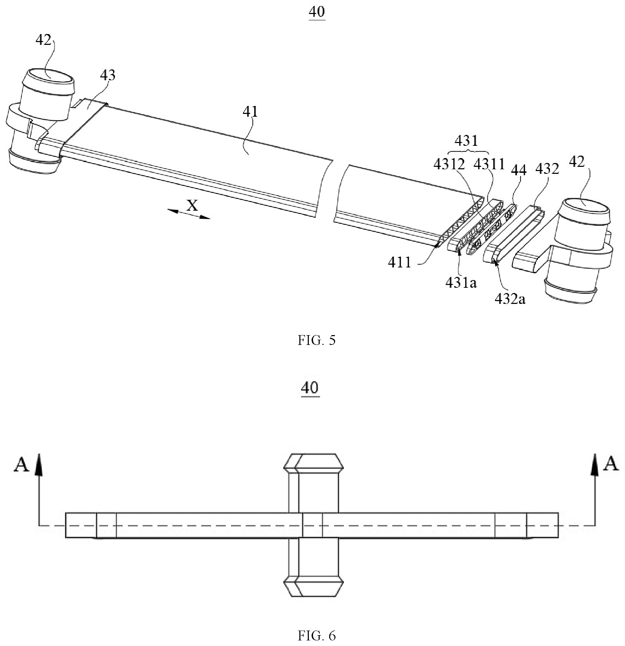

As shown in FIG. 5 to FIG. 8, the heat exchange assembly 40 provided in the embodiments of this application includes a heat exchange piece 41, a current collecting piece 42, and a sleeve 43. The heat exchange piece 41 has a flow channel 411 extending along a first direction X. The current collecting piece 42 is provided at two ends of the heat exchange piece 41 along the first direction X. The current collecting piece 42 is provided with a fluid inlet/outlet 42a, and the fluid inlet/outlet 42a communicates with the flow channel 411. The sleeve 43 is sleeved onto at least one of the heat exchange piece 41 and the current collecting piece 42, and connects the heat exchange piece 41 and the current collecting piece 42.

The heat exchange piece 41 has a flow channel 411 extending along the first direction X. Optionally, the heat exchange piece 41 may be provided with one, two, or more flow channels 411 extending along the first direction X as required. The flow channels 411 may be isolated from each other, and series connection or parallel connection of the plurality of flow channels 411 of the heat exchange piece 41 may be achieved by appropriately setting the structure of the current collecting piece 42. Certainly, some of the flow channels 411 in the heat exchange piece 41 are alternatively connected in series with each other, and the others are connected in parallel with each other. The specific arrangement may be made according to actual needs.

The current collecting piece 42 has a fluid inlet/outlet 42a. The current collecting piece 42 may be provided at two ends of the heat exchange piece 41 along the first direction X. Then the heat exchange assembly 40 may include two current collecting pieces 42. The two current collecting pieces 42 are respectively provided at the two ends of the heat exchange piece 41 along the first direction X, and the two current collecting pieces 42 at the two ends of the heat exchange piece 41 each have a fluid inlet/outlet 42a. The flow channel 411 communicates with the fluid inlet/outlet 42a of the current collecting piece 42 along the first direction X. Then, in a case that the heat exchange piece 41 is provided with one flow channel 411, two ends of one flow channel 411 along the first direction X are separately connected to the fluid inlets/outlets 42a. In a case that the heat exchange piece 41 is provided with a plurality of flow channels 411, based on the series connection or parallel connection of the plurality of flow channels 411, two ends of one flow channel 411 may directly communicate with two fluid inlets/outlets 42a, or two flow channels 411 may communicate with two fluid inlets/outlets 42a respectively.

It is understood that any of the fluid inlets/outlets 42a of the current collecting pieces 42 at the two ends of the heat exchange piece 41 may be used for inflow of fluid medium, and the other for outflow of fluid medium according to actual needs.

The sleeve 43 is sleeved onto at least one of the heat exchange piece 41 and the current collecting piece 42. Optionally, the sleeve 43 may be sleeved only onto the heat exchange piece 41, or the sleeve 43 may be sleeved only onto the current collecting piece 42, or the sleeve 43 may be sleeved onto both the heat exchange piece 41 and the current collecting piece 42.

In the embodiment in which the sleeve 43 is sleeved onto both the heat exchange piece 41 and the current collecting piece 42, parts of the sleeve 43 respectively sleeved onto the current collecting piece 42 and the heat exchange piece 41 may be integrally formed, or the parts of the sleeve 43 respectively sleeved onto the current collecting piece 42 and the heat exchange piece 41 may be separately formed and connected to each other.

The sleeve 43 is sleeved onto the current collecting piece 42. Then the sleeve 43 may be sleeved onto an inner wall of the current collecting piece 42, or the sleeve 43 may be sleeved onto an outer peripheral wall of the current collecting piece 42. Similarly, the sleeve 43 is sleeved onto the heat exchange piece 41. The sleeve 43 may be sleeved onto the outer peripheral wall of the current collecting piece 42, or the current collecting piece 42 may be sleeved onto the outer peripheral wall of the sleeve 43.

The sleeve 43 connects the heat exchange piece 41 and the current collecting piece 42. Then the current collecting piece 42 and the heat exchange piece 41 may be connected to each other through the sleeve 43 to achieve the communication between the flow channel 411 and the fluid inlet/outlet 42a.

The sleeving of the sleeve 43 and the current collecting piece 42 increases the structural strength of a sleeving portion 4311 between the current collecting piece 42 and the sleeve 43. Similarly, the sleeving of the sleeve 43 and the heat exchange piece 41 increases the structural strength of a sleeving portion 4311 between the heat exchange piece 41 and the sleeve 43. Therefore, the mutual sleeving of the sleeve 43 with any one of the current collecting piece 42 and the heat exchange piece 41 helps increase the connection strength between the current collecting piece 42 and the heat exchange piece 41.

In a case that the heat exchange assembly 40 is applied in the battery 10, the low-temperature or high-temperature flowing medium flowing inside the heat exchange piece 41 may exchange heat with the battery cell 30 of the battery 10 to cool or heat the battery cell 30.

Therefore, the heat exchange assembly 40 provided in the embodiments of this application helps improve the connection strength between the current collecting piece 42 and the heat exchange piece 41 with the sleeve 43 sleeved onto at least one of the current collecting piece 42 and the heat exchange piece 41, and helps improve the overall structural strength of the heat exchange assembly 40. In this way, the risk of leakage of the flowing medium caused by failure of the connection between the current collecting piece 42 and the heat exchange piece 41 is reduced, improving the reliability of the heat exchange assembly 40. In a case that the heat exchange assembly 40 is applied in the battery 10, the reliability of heat exchange between the heat exchange assembly 40 and the battery cell 30 is improved, which helps improve the reliability of the battery 10.

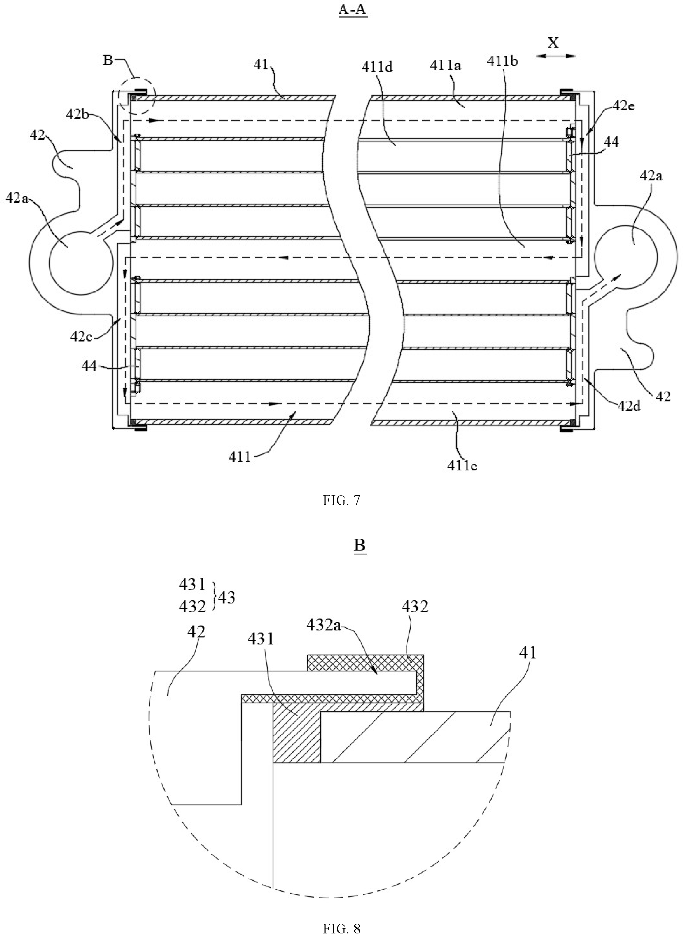

As shown in FIG. 7 and FIG. 8, in some embodiments, the sleeve 43 includes a first sub-sleeve 431 and a second sub-sleeve 432. The first sub-sleeve 431 is sleeved onto an end portion of the heat exchange piece 41 along the first direction X. The second sub-sleeve 432 is sleeved onto an end of the current collecting piece 42 facing the heat exchange piece 41. The first sub-sleeve 431 and the second sub-sleeve 432 are connected to each other.

The sleeve 43 includes a first sub-sleeve 431 and a second sub-sleeve 432. The first sub-sleeve 431 and the second sub-sleeve 432 may be formed by injection molding, casting, machining, or the like.

The first sub-sleeve 431 and the second sub-sleeve 432 are connected to each other. Optionally, the first sub-sleeve 431 and the second sub-sleeve 432 may be integrally formed, or the first sub-sleeve 431 and the second sub-sleeve 432 may be formed separately and then connected to each other.

The first sub-sleeve 431 is sleeved onto an end portion of the heat exchange piece 41 along the first direction X. Optionally, the first sub-sleeve 431 may be sleeved onto an outer peripheral side of the heat exchange piece 41, or an end portion of the heat exchange piece 41 along the first direction X may be sleeved onto an outer peripheral side of the first sub-sleeve 431. Similarly, the second sub-sleeve 432 may be sleeved onto an outer peripheral side of an end of the current collecting piece 42 facing the heat exchange piece 41, or an end of the current collecting piece 42 facing the heat exchange piece 41 may be sleeved onto an outer peripheral side of the second sub-sleeve 432.

The connection between the first sub-sleeve 431 and the heat exchange piece 41 may be a direct connection, or a sealed connection achieved through adhesion connection or achieved with a sealing member. Similarly, the connection between the second sub-sleeve 432 and the current collecting piece 42 may be a direct connection, or a sealed connection achieved with a sealing member or achieved through adhesion connection.

The first sub-sleeve 431 is sleeved onto an end portion of the heat exchange piece 41 along the first direction X, the second sub-sleeve 432 is sleeved onto an end of the current collecting piece 42 facing the heat exchange piece 41, and the first sub-sleeve 431 and the second sub-sleeve 432 are connected to each other. This helps further improve the connection strength between the current collecting piece 42 and the heat exchange piece 41, thereby improving the overall structural strength of the heat exchange assembly 40. In a scenario where the heat exchange assembly 40 is applied in the battery 10, this helps further improve the reliability of heat exchange between the heat exchange assembly 40 and the battery cell 30, thereby further improving the reliability of the battery 10.

In some embodiments, materials of the first sub-sleeve 431 and the second sub-sleeve 432 both include plastic and are both formed through injection molding, and the first sub-sleeve 431 and the second sub-sleeve 432 are connected through welding.

Plastic is relatively light. Therefore, inclusion of plastic in the materials of the first sub-sleeve 431 and the second sub-sleeve 432 helps reduce an overall weight of the heat exchange assembly 40. In a scenario where the heat exchange assembly 40 is applied in the battery 10, this helps improve the energy density of the battery 10. Injection molding of the first sub-sleeve 431 and the second sub-sleeve 432 helps reduce difficulty of processing the first sub-sleeve 431 and the second sub-sleeve 432, which simplifies the production process of the first sub-sleeve 431 and the second sub-sleeve 432 and reduces the production cost of the heat exchange assembly 40. Welding connection of the first sub-sleeve 431 and the second sub-sleeve 432 helps improve the connection strength between the first sub-sleeve 431 and the second sub-sleeve 432 and further improves the overall structural strength of the heat exchange assembly 40.

As shown in FIG. 7 and FIG. 8, in some embodiments, at least a part of the second sub-sleeve 432 is sleeved onto an outer peripheral side of the first sub-sleeve 431.

In this way, the connection strength between the first sub-sleeve 431 and the second sub-sleeve 432 is improved, which helps improve the connection strength between the heat exchange piece 41 and the current collecting piece 42, and helps further improve the overall structural strength of the heat exchange assembly 40.

As shown in FIG. 5, FIG. 7, FIG. 8, and FIG. 9, in some embodiments, a side of the second sub-sleeve 432 facing the current collecting piece 42 has a groove 432a, and an end of the current collecting piece 42 facing the second sub-sleeve 432 is accommodated in the groove 432a.

Optionally, the groove 432a of the second sub-sleeve 432 may be annular or arc-shaped, that is, the groove 432a may be around a circumference of the current collecting piece 42, or grooves 432a may be separately disposed on a peripheral side of the current collecting piece 42.

With an end of the current collecting piece 42 facing the second sub-sleeve 432 accommodated in the groove 432a, the current collecting piece 42 may be snap-fitted into the groove 432a, or the current collecting piece 42 may be in clearance fit with the groove 432a.

The side of the second sub-sleeve 432 facing the current collecting piece 42 is provided with a groove 432a and the end of the current collecting piece 42 facing the second sub-sleeve 432 is accommodated in the groove 432a, so that the connection strength between the second sub-sleeve 432 and the current collecting piece 42 is improved, thereby helping improve the overall structural strength of the heat exchange assembly 40.

It is understood that the materials of the first sub-sleeve 431 and the heat exchange piece 41 may be the same or different. In an embodiment in which the materials of the first sub-sleeve 431 and the heat exchange piece 41 are the same, the two may be connected by welding, adhesive bonding, and the like. In an embodiment in which the materials of the first sub-sleeve 431 and the heat exchange piece 41 are different, the first sub-sleeve 431 and the heat exchange piece 41 may be connected by adhesive bonding or other processes. Similarly, materials of the second sub-sleeve 432 and the current collecting piece 42 may be the same or different.

Optionally, the first sub-sleeve 431 may be annular, or the first sub-sleeve 431 may include an annular structure, a reinforcing rib formed in the annular structure, and the like.

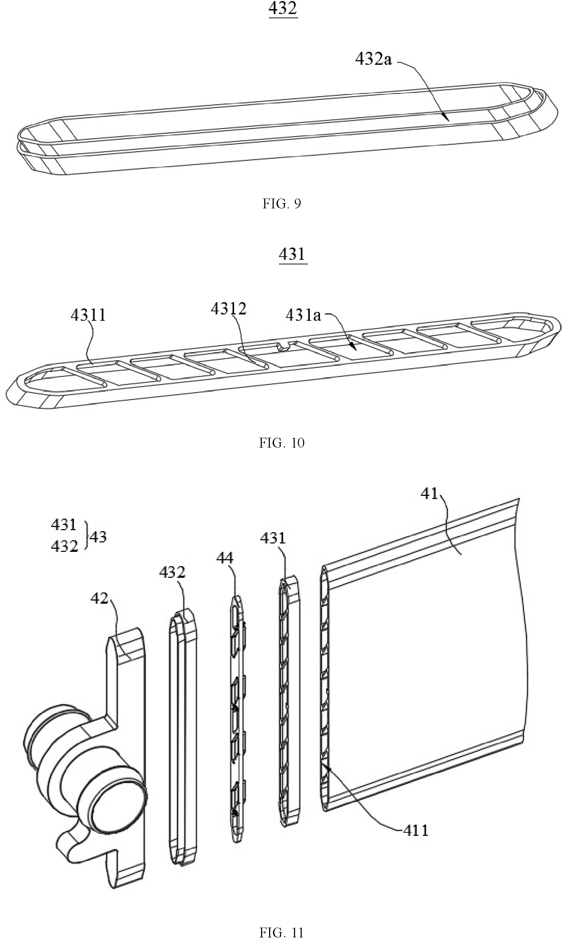

As shown in FIG. 5 and FIG. 10, in some embodiments, the heat exchange piece 41 is provided with a plurality of flow channels 411 that are spaced apart, the first sub-sleeve 431 includes a sleeving portion 4311 and a reinforcing portion 4312, the reinforcing portion 4312 and the sleeving portion 4311 jointly form a plurality of through holes 431a, and the plurality of through holes 431a are in one-to-one correspondence with the plurality of flow channels 411.

In this way, the plurality of through holes 431a do not block the flow channels 411 of the heat exchange piece 41, and the first sub-sleeve 431 includes the sleeving portion 4311 and the reinforcing portion 4312, which helps improve the structural strength of the first sub-sleeve 431, thereby improving the connection strength between the heat exchange piece 41 and the first sub-sleeve 431.

In some embodiments, a material of the first sub-sleeve 431 is different from that of the heat exchange piece 41, and the first sub-sleeve 431 is adhesively connected to the heat exchange piece 41.

The material of the first sub-sleeve 431 is different from that of the heat exchange piece 41. Then the specific materials of the first sub-sleeve 431 and the heat exchange piece 41 may be set as required to facilitate separate manufacturing of the two while improving the structural strength of the first sub-sleeve 431 and the heat exchange piece 41. By way of example, the material of the first sub-sleeve 431 may be include plastic, and the material of the heat exchange piece 41 may include aluminum. In this way, the structural strength of the heat exchange piece 41 is improved, and the first sub-sleeve 431 may be produced through injection molding, which helps simplify the production of the first sub-sleeve 431.

Since the material of the first sub-sleeve 431 is different from that of the heat exchange piece 41, the first sub-sleeve 431 is adhesively connected to the heat exchange piece 41. This improves the connection reliability between the first sub-sleeve 431 and the heat exchange piece 41. When an adhesive is arranged around a circumference of the first sub-sleeve 431 and the heat exchange piece 41, the adhesive has a certain sealing effect, which helps achieve sealed connection between the first sub-sleeve 431 and the heat exchange piece 41.

In some embodiments, the material of the second sub-sleeve 432 is different from that of the current collecting piece 42, and the second sub-sleeve 432 is adhesively connected to the current collecting piece 42.

The material of the second sub-sleeve 432 is different from that of the current collecting piece 42. Then the specific materials of the second sub-sleeve 432 and the current collecting piece 42 may be set as required to facilitate separate manufacturing of the two while improving the structural strength of the second sub-sleeve 432 and the heat exchange piece 41. By way of example, the material of the second sub-sleeve 432 may include plastic, and the material of the current collecting piece 42 may include aluminum. In this way, the structural strength of the current collecting piece 42 is improved, and the second sub-sleeve 432 may be produced through injection molding, which helps simplify the production process of the second sub-sleeve 432.

Since the material of the second sub-sleeve 432 is different from that of the current collecting piece 42, the second sub-sleeve 432 is adhesively connected to the current collecting piece 42. This improves the connection reliability between the second sub-sleeve 432 and the current collecting piece 42. In a case that the adhesive glue is around the circumference of the second sub-sleeve 432 and the current collecting piece 42, the adhesive glue also has a certain sealing effect, which helps achieve a sealed connection between the second sub-sleeve 432 and the current collecting piece 42.

As shown in FIG. 7, in some embodiments, the flow channel 411 includes a first flow channel 411a, a second flow channel 411b and a third flow channel 411c that are spaced apart from each other. The current collecting piece 42 at one end of the heat exchange piece 41 includes a first flow guide channel 42b and a second flow guide channel 42c that are isolated from each other. The first flow guide channel 42b communicates the fluid inlet/outlet 42a with the first flow channel 411a. The second flow guide channel 42c communicates the third flow channel 411c with an adjacent second flow channel 411b. The current collecting piece 42 at the other end of the heat exchange piece 41 includes a third flow guide channel 42d and a fourth flow guide channel 42e that are isolated from each other. The third flow guide channel 42d communicates the third flow channel 411c with the fluid inlet/outlet 42a. The fourth flow guide channel 42e communicates the first flow channel 411a with an adjacent second flow channel 411b, so that the first flow channel 411a, the second flow channel 411b and the third flow channel 411c are connected in series.

The flow channel 411 includes a first flow channel 411a, a second flow channel 411b, and a third flow channel 411c. The first flow channel 411a, the second flow channel 411b, and the third flow channel 411c are connected in series with each other. Optionally, the heat exchange piece 41 may include one second flow channel 411b or a plurality of second flow channels 411b. The first flow channel 411a, the second flow channel 411b, and the third flow channel 411c of the flow channel 411 are connected in series with each other. Then the flow channel 411 may also have another flow channel 411 not connected in series with the first flow channel 411a, the second flow channel 411b, or the third flow channel 411c.

It is understood that, in the case that the flow channel 411 is provided with multiple second flow channels 411b, to achieve series connection of the plurality of second flow channels 411b, additional second flow guide channels 42c and fourth flow guide channels 42e are required to achieve the series connection of the plurality of second flow channels 411b.

With such arrangement, the current collecting piece 42 is provided with a first flow guide channel 42b, a second flow guide channel 42c, a third flow guide channel 42d, and a fourth flow guide channel 42e respectively to connect the first flow channel 411a, the second flow channel 411b, and the third flow channel 411c in series. When the heat exchange assembly 40 is applied in the battery 10, the flowing medium flows through the first flow channel 411a, the second flow channel 411b, and the third flow channel 411c in sequence, which facilitates sufficient heat exchange between the flowing medium and the battery cell 30, helps improve the heat exchange efficiency between the flowing medium and the battery cell 30, and reduces a usage amount of the flowing medium.

As shown in FIG. 7, FIG. 11, FIG. 12, and FIG. 13, in some embodiments, the heat exchange assembly 40 further includes a blocking member 44, the flow channel 411 includes an alternative flow channel 411d, and the blocking member 44 is provided at both ends of the heat exchange piece 41 along the first direction X to block the alternative flow channel 411d.

After the manufacture of the heat exchange piece 41 is completed, based on positions of the heat exchange piece 41 and the battery cell 30 relative to each other, some of the plurality of flow channels 411 may be selectively used for flowing the flowing medium to maximize the heat exchange efficiency between the battery cell 30 and the heat exchange piece 41. For those alternative flow channels 411d, because the flow channels 411 do not have a corresponding battery cell 30 or the flow channels 411 are distributed relatively densely, the alternative flow channels 411d may be blocked by the blocking member 44, so that the flowing medium from does not flow to the alternative flow channels 411d. This improves the connection strength between the current collecting piece 42 and the heat exchange piece 41, helps improve the heat exchange efficiency between the heat exchange assembly 40 and the battery cell 30, and improves utilization of the flowing medium. Moreover, the blockage of the alternative flow channel 411d by the blocking member 44 helps improve the connection strength between the current collecting piece 42 and the heat exchange piece 41, thereby improving the overall structural strength of the heat exchange assembly 40.

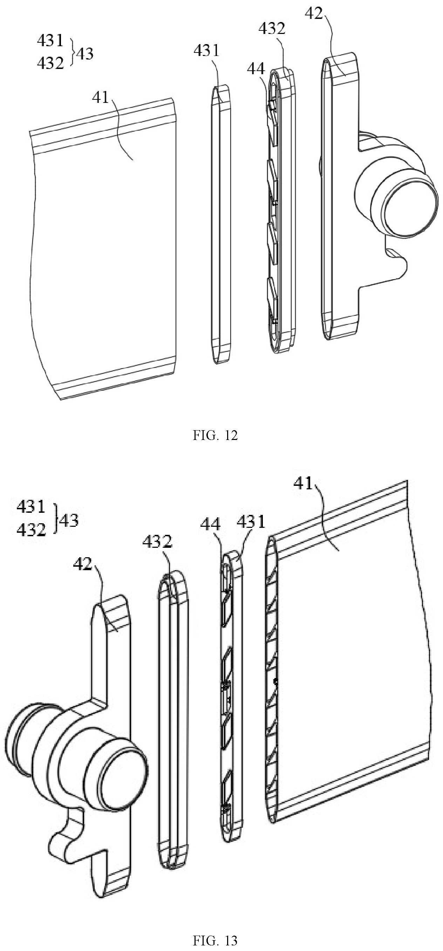

As shown in FIG. 12 and FIG. 13, in some embodiments, the blocking member 44 and the sleeve 43 are integrally formed by injection molding.

In this case, the materials of the blocking member 44 and the sleeve 43 both include plastic and are integrally formed by injection molding with a corresponding mold.

In an embodiment in which the sleeve 43 includes a first sub-sleeve 431 and a second sub-sleeve 432, the blocking member 44 may be integrally formed with the first sub-sleeve 431, as shown in FIG. 13; or the blocking member 44 may be integrally formed with the second sub-sleeve 432, as shown in FIG. 12.

Integral injection molding of the blocking member 44 and the sleeve 43 helps improve the connection strength between the blocking member 44 and the sleeve 43 and simplifies the production process of the blocking member 44 and the sleeve 43.

The case 11 provided in the embodiments of this application includes the heat exchange assembly 40 provided in any of the above embodiments.

The case 11 provided in the embodiments of this application has the same technical effects because it includes the heat exchange assembly 40 provided in any of the above embodiments. Details are not repeated herein.

The battery 10 provided in the embodiment of this application includes the case 11 and the battery cell 30 provided in the above embodiment. The battery cell 30 is accommodated in the case 11. The heat exchange piece 41 is in contact with the battery cell 30 and is configured to exchange heat with the battery cell 30.

The battery 10 provided in the embodiment of this application has the same technical effects because the case 11 provided in the embodiments of this application is applied. Details are not repeated herein.

The electric apparatus provided in the embodiment of this application includes the battery 10 provided in the above embodiment. The battery 10 is configured to provide electric energy.

The electric apparatus provided in the embodiment of this application has the same technical effects because the battery 10 provided in the above embodiment is applied. Details are not repeated herein.

As shown in FIG. 5 to FIG. 13, in some embodiments, the heat exchange assembly 40 provided in the embodiments of this application includes a heat exchange piece 41, a current collecting piece 42, a sleeve 43, and a blocking member 44. The heat exchange piece 41 has a flow channel 411 extending along a first direction X. The current collecting piece 42 is provided at two ends of the heat exchange piece 41 along the first direction X. The current collecting piece 42 has a fluid inlet/outlet 42a. The fluid inlet/outlet 42a communicates with the flow channel 411. The sleeve 43 includes a first sub-sleeve 431 and a second sub-sleeve 432. The first sub-sleeve 431 is sleeved onto an end portion of the heat exchange piece 41 along the first direction X. The second sub-sleeve 432 is sleeved onto an end of the current collecting piece 42 facing the heat exchange piece 41. The materials of the first sub-sleeve 431 and the second sub-sleeve 432 both include plastic and are both formed by injection molding. The first sub-sleeve 431 and the second sub-sleeve 432 are connected through welding. A side of the second sub-sleeve 432 facing the current collecting piece 42 is provided with a groove 432a. An end of the current collecting piece 42 facing the second sub-sleeve 432 is accommodated in the groove 432a. The heat exchange piece 41 is provided with a plurality of flow channels 411 spaced apart. The heat exchange piece 41 includes a tube body and a separator provided in a cover body. Adjacent flow channels 411 are separated by the separator. The first sub-sleeve 431 is provided with through holes 431a in one-to-one correspondence with the plurality of flow channels 411. The material of the heat exchange piece 41 includes aluminum. The material of the current collecting piece 42 includes aluminum. The first sub-sleeve 431 is adhesively connected to the heat exchange piece 41. The second sub-sleeve 432 is adhesively connected to the current collecting piece 42. The flow channel 411 includes a first flow channel 411a, a second flow channel 411b, a third flow channel 411c, and an alternative flow channel 411d that are spaced apart from each other. The current collecting piece 42 at one end of the heat exchange piece 41 includes a first flow guide channel 42b and a second flow guide channel 42c that are isolated from each other. The first flow guide channel 42b communicates the fluid inlet/outlet 42a with the first flow channel 411a. The second flow guide channel 42c communicates the third flow channel 411c with an adjacent second flow channel 411b. The current collecting piece 42 at the other end of the heat exchange piece 41 includes a third flow guide channel 42d and a fourth flow guide channel 42e that are isolated from each other. The third flow guide channel 42d communicates the third flow channel 411c with the fluid inlet/outlet 42a. The fourth flow guide channel 42e communicates the first flow channel 411a with an adjacent second flow channel 411b, so that the first flow channel 411a, the second flow channel 411b, and the third flow channel 411c are connected in series. The blocking member 44 is provided at two ends of the heat exchange piece 41 along the first direction X to block the alternative flow channel 411d.

The heat exchange assembly 40 provided in the embodiment of this application helps improve the connection strength between the current collecting piece 42 and the heat exchange piece 41 with the sleeve 43 sleeved onto at least one of the current collecting piece 42 and the heat exchange piece 41, and helps improve the overall structural strength of the heat exchange assembly 40. In this way, the risk of leakage of the flowing medium caused by failure of the connection between the current collecting piece 42 and the heat exchange piece 41 is reduced, and the reliability of the heat exchange assembly 40 is improved. In a case that the heat exchange assembly 40 is applied in the battery 10, the reliability of heat exchange between the heat exchange assembly 40 and the battery cell 30 is improved, which helps improve the reliability of the battery 10.

It should be noted that the embodiments in this application and the features in the embodiments may be combined with each other, provided that no conflict arises therebetween.

Finally, it should be noted that: the above embodiments are only used to illustrate the technical solutions of this application, rather than to limit it; although this application has been described in detail with reference to the foregoing embodiments, those of ordinary skill in the art should understand that they may still modify the technical solutions recorded in the foregoing embodiments, or equivalently replace some of the technical features therein. However, these modifications or replacements do not cause the essence of the corresponding technical solutions to deviate from the spirit and scope of the technical solutions of the embodiments of this application.

## Claims

1. A heat exchange assembly, comprising:
a heat exchange piece, provided with a flow channel extending along a first direction;
a current collecting piece, provided at two ends of the heat exchange piece along the first direction, wherein the current collecting piece is provided with a fluid inlet/outlet, and the fluid inlet/outlet communicates with the flow channel; and
a sleeve, sleeved onto at least one of the heat exchange piece and the current collecting piece, and connecting the heat exchange piece and the current collecting piece.

2. The heat exchange assembly according to claim 1, wherein the sleeve comprises a first sub-sleeve and a second sub-sleeve, the first sub-sleeve is sleeved onto an end portion of the heat exchange piece along the first direction, the second sub-sleeve is sleeved onto an end of the current collecting piece facing the heat exchange piece, and the first sub-sleeve and the second sub-sleeve are connected to each other.

3. The heat exchange assembly according to claim 2, wherein materials of the first sub-sleeve and the second sub-sleeve both comprise plastic and are both formed by injection molding, and the first sub-sleeve and the second sub-sleeve are connected through welding.

4. The heat exchange assembly according to claim 2 or 3, wherein at least a part of the second sub-sleeve is sleeved onto an outer peripheral side of the first sub-sleeve.

5. The heat exchange assembly according to any one of claims 2 to 4, wherein a side of the second sub-sleeve facing the current collecting piece is provided with a groove, and an end of the current collecting piece facing the second sub-sleeve is accommodated in the groove.

6. The heat exchange assembly according to any one of claims 2 to 5, wherein the heat exchange piece is provided with a plurality of flow channels spaced apart, the first sub-sleeve comprises a sleeving portion and a reinforcing portion, the reinforcing portion and the sleeving portion jointly form a plurality of through holes, and the plurality of through holes are in one-to-one correspondence with the plurality of flow channels.

7. The heat exchange assembly according to any one of claims 2 to 6, wherein a material of the first sub-sleeve is different from a material of the heat exchange piece, and the first sub-sleeve is adhesively connected to the heat exchange piece; and/or a material of the second sub-sleeve is different from a material of the current collecting piece, and the second sub-sleeve is adhesively connected to the current collecting piece.

8. The heat exchange assembly according to any one of claims 1 to 7, wherein the flow channel comprises a first flow channel, a second flow channel, and a third flow channel that are spaced apart from each other, the current collecting piece at one end of the heat exchange piece comprises a first flow guide channel and a second flow guide channel that are isolated from each other, the first flow guide channel communicates the fluid inlet/outlet with the first flow channel, and the second flow guide channel communicates the third flow channel with the adjacent second flow channel; and the current collecting piece at the other end of the heat exchange piece comprises a third flow guide channel and a fourth flow guide channel that are isolated from each other, the third flow guide channel communicates the third flow channel with the fluid inlet/outlet, and the fourth flow guide channel communicates the first flow channel with the adjacent second flow channel, so that the first flow channel, the second flow channel, and the third flow channel are connected in series.

9. The heat exchange assembly according to any one of claims 1 to 8, wherein the heat exchange assembly further comprises a blocking member, the flow channel comprises an alternative flow channel, and the blocking member is provided at the two ends of the heat exchange piece along the first direction to block the alternative flow channel.

10. The heat exchange assembly according to claim 9, wherein the blocking member and the sleeve are integrally formed by injection molding.

11. A case, comprising the heat exchange assembly according to any one of claims 1 to 10.

12. A battery, comprising:
the case according to claim 11; and
a battery cell, accommodated in the case, wherein the heat exchange piece is in contact with the battery cell and configured to exchange heat with the battery cell.

13. An electric apparatus, comprising the battery according to claim 12, wherein the battery is configured to provide electric energy.
